# EUROPÄISCHE PATENTANMELDUNG

(11) **EP 4 603 170 A1**
(43) Veröffentlichungstag der Anmeldung: **20.08.2025**
(21) Anmeldenummer: 25156734.3
(22) Anmeldetag: 10.02.2025
(51) Int. Cl.: B01D 46/12, B01D 46/62, B03C 3/017, B01D 53/86, F23J 15/02

(54) **BRENNGASREINIGUNGSVORRICHTUNG UND KAMINOFEN MIT EINER BRENNGASREINIGUNGSVORRICHTUNG**

(30) Priorität: 15.02.2024 DE 102024104185
(71) Anmelder: Schiedel GmbH, 4542 Nussbach (AT)
(72) Erfinder: Marschalkowski, Kay, 91085 Weisendorf (DE); Jost, Manfred, 95679 Waldershof (DE)
(74) Vertreter: Müller Schupfner & Partner Patent- und Rechtsanwaltspartnerschaft mbB (Muc)

(57) **Zusammenfassung**

Es wird eine Brenngasreinigungsvorrichtung (10) für einen Kaminofen bereitgestellt, umfassend einen ersten Filterabschnitt (F1), der zumindest eine Filterstruktur (11), vorzugsweise aus Keramik, umfasst, einen zweiten Filterabschnitt (F2), der einen elektrostatischen Abscheider (12) umfasst und zumindest ein Katalysatorelement (13).

## Beschreibung

Die vorliegende Erfindung betrifft eine Brenngasreinigungsvorrichtung, insbesondere für Feststoffverbrennungen. Die vorliegende Erfindung betrifft ferner einen Kaminofen mit einer solchen Brenngasreinigungsvorrichtung.

Bei der Scheitholzverbrennung in Wohnraumfeuerstätten, s.g. Kaminöfen, entstehen sowohl umwelt- und gesundheitsschädliche Abgase. Diese Abgase enthalten auch feste Partikel von unterschiedlichen Größen und Massen. Abgasreinigungssysteme dienen dazu, die Schädlichkeit von Abgasen zu reduzieren, z.B. unvollständig verbrannte Partikel wie Ruß und Feinstaub zu filtern bzw. abzuscheiden. Für die Filterung grober und mittlerer Partikel wie Ruß u.Ä. kommen Partikelfilter aus porösen Materialien zum Einsatz. Als Filtermaterial kann beispielsweise Keramik verwendet werden. Für die Umwandlung der Abgase kommen teilweise auch Katalysatoren zum Einsatz, welche gesundheitsschädliche Bestandteile in der Gasphase umwandeln. Solche Katalysatoren benötigen sowohl eine hohe Startals auch Arbeitstemperatur. Ferner benötigen Katalysatoren konstante Temperaturbedingungen, um einen effektiven Betrieb zu ermöglichen.

Im Betrieb lagern sich Feinstaub und Partikel am Katalysator ab. Die Effektivität des Katalysators nimmt durch diese Ablagerungen ab, da diese die katalytisch wirksame Oberfläche benetzten bzw. verstopfen, sodass Abgas bzw. Brenngas nicht mehr mit der reaktiven Oberfläche des Katalysators in Kontakt kommen kann. Daher ist die Wirksamkeit dieser Katalysatoren häufig begrenzt.

Somit hat sich ergeben, dass ein Bedarf besteht, eine verbesserte Brenngasreinigungsvorrichtung bereitzustellen, um eine effizientere Abgasfilterung zu ermöglichen. Insbesondere besteht Bedarf, eine Brenngasreinigungsvorrichtung bereitzustellen, die einen effizienteren Betrieb eines Katalysators ermöglicht.

Die Aufgabe der vorliegenden Erfindung besteht daher darin, eine Brenngasreinigungsvorrichtung bereitzustellen. Ferner ist es Aufgabe der vorliegenden Erfindung einen Kamin mit einer solchen Brenngasreinigungsvorrichtung bereitzustellen.

Gemäß einem ersten Aspekt der vorliegenden Erfindung kann eine Brenngasreinigungsvorrichtung für einen Kaminofen bereitgestellt werden, vorzugsweise umfassend einen ersten Filterabschnitt der zumindest eine Filterstruktur, vorzugsweise aus Keramik, umfasst, einen zweiten Filterabschnitt, der einen elektrostatischen Abscheider umfasst und zumindest ein Katalysatorelement.

Die Brenngasreinigungsvorrichtung ist vorzugsweise dazu vorgesehen in einem Brennraum eines Kamins oder der Nähe eines Brennraums, insbesondere eines Kamins, angeordnet zu sein. Die Brenngasreinigungsvorrichtung ist vorzugsweise für eine Verwendung bei der Verbrennung von Feststoffen vorgesehen. Alternativ sind andere Verwendungen mit anderen Brennmaterialien, beispielsweise Gas oder Öl, denkbar. In anderen Worten kann der Brennraum daher ein Feststoffbrennraum sein.

Die Filterstruktur des ersten Filterabschnitts umfasst vorzugsweise einen Partikelfilter. Es ist denkbar, dass die Filterstruktur mehrere Filterschichten mit unterschiedlichen Filtereigenschaften umfasst. Die Filterstruktur ist vorzugsweise zum Filtern von Partikeln ausgebildet. Die Filterstruktur ist vorzugsweise offenporig ausgebildet. Unter offenporig ist zu verstehen, dass die Filterstruktur miteinander verbundene bzw. vernetzte Kammern umfasst. Die Filterstruktur umfasst vorzugsweise einen Keramikfilter, vorzugsweise aus einem Keramikschaum, insbesondere aus einem Aluminiumoxid.

Der zweite Filterabschnitt umfasst den elektrostatischen Abscheider. Der elektrostatische Abscheider dient insbesondere und/oder vornehmlich und/oder u.a. zum Filtern bzw. Abscheiden von Feinstaub. Das Filtern des Feinstaubs erfolgt durch ein elektrostatisches Feld. Beispielsweise werden negativ geladene Staubteilchen von einem positivgeladenen Element, beispielsweise einer Oberfläche eines mit Spannung beaufschlagten Elements, angezogen und durch die Anziehungskraft gehalten. Der elektrostatische Abscheider ist vorzugsweise an einem Hochspannungsgleichstrom angeschlossen. Der elektrostatische Abscheider ermöglicht vorteilhafterweise eine Abscheidung von mehr als 90 % des Feinstaubs. Daher ist es vorteilhaft, den elektrostatischen Abscheider in Strömungsrichtung eines Brenngases stromaufwärts des Katalysatorelements anzuordnen. Stromaufwärts bedeutet daher insbesondere entgegen der Strömungsrichtung des Brenngases. Alternativ oder zusätzlich bedeutet dies, dass ein Staub abscheidendes Funktionselement von der Brennkammer aus betrachtet vorzugsweise vor dem katalysierenden Element angeordnet ist. Vorzugsweise können die Elemente miteinander kombiniert ausgeführt sein.

Der elektrostatischen Abscheider umfasst vorzugsweise einen Kondensator oder bildet einen Kondensator aus, wobei der Kondensator vorzugsweise ein erstes Elektrodenelement und ein zweites Elektrodenelement umfasst, beispielsweise eine erste Kondensatorplatte und eine zweite Kondensatorplatte, mit jeweils einer definierten Geometrie aus einem leitfähigen Material, beispielsweise aus einer leitfähigen Keramik oder aus einer Keramik mit einem an der Oberfläche aufgebrachten leitfähigen Beschichtungsmaterial, und eine nichtleitende Mittelschicht als Isolator bzw. Dielektrikum, beispielsweise eine nichtleitende Keramik, mit einer definierten Geometrie. Die Begriffe erstes Elektrodenelement und zweites Elektrodenelement sind hier überwiegend breit zu verstehen. Es versteht sich von selbst, dass unterschiedliche Geometrien bzw. Körper als erstes Elektrodenelement und zweites Elektrodenelement möglich sind. Ferner ist vorzugsweise das erste Elektrodenelement als Kathode und das zweite Elektrodenelement als Anode ausgebildet, oder umgekehrt. Das erste Elektrodenelement und das zweite Elektrodenelement können auch als Kondensatorplatten bezeichnet werden.

Die Stärke des elektrostatischen Feldes E des Kondensators beruht physikalisch auf der Coulomb-Kraft, die umgekehrt proportional zum Quadrat des Abstands zwischen dem ersten Elektrodenelement und dem zweiten Elektrodenelement und direkt proportional zu den Ladungen *Q*1 und *Q*2 des ersten Elektrodenelement und des zweiten Elektrodenelement ist, wobei die Richtung der Kraft die Achse ist, die die Schwerpunkte der geladenen Körper (Elektrodenelemente) verbindet. Die potentielle Ladung Q ist abhängig von der Größe der Elektrodenschichten/-körper des ersten Elektrodenelements und des zweiten Elektrodenelements und der elektrischen Flussdichte D und ist proportional zur angelegten Spannung U; der Abstand d ist definiert durch die Schichtdicke und die Isolationseigenschaft = Dielektrizitätskonstante *ε*, materialabhängig, oder die der Luft *ε*₀ innerhalb der Poren. Für das homogene Feld eines Standardplattenkondensators ist E definiert als IEI = U/d und IDI = ε*IEI.

Das Katalysatorelement dient zum Umwandeln der Abgase. Das Katalysatorelement ermöglicht es, gesundheitsschädliche Bestandteile in der Gasphase durch Oxidation oder Reduktion der schädlichen Gase umzuwandeln.

Das Katalysatorelement kann zumindest ein Material mit katalytischen Eigenschaften umfassen. Das Katalysatorelement kann beispielsweise eine Beschichtung aus einem Material mit katalytischen Eigenschaften umfassen. Ferner kann das Katalysatorelement eine Struktur bzw. Geometrie mit einer möglichst großen reaktiven Oberfläche umfassen. Es ist denkbar, dass die Brenngasreinigungsvorrichtung mehrere Katalysatorelemente aufweist. Die mehreren Katalysatorelemente können unterschiedliche Katalysatormaterialien und somit unterschiedliche Eigenschaften, beispielsweise oxidierende und/oder reduzierende Eigenschaften, umfassen. Beispielsweise und nicht beschränkend können als Katalysatormaterialien Chrom, Palladium, Platin, Rhodium oder andere Edelmetalle oder sonstige geeignete Materialien eingesetzt werden, sowohl in reiner Form als auch als Kombination oder Mischung in einem bestimmten Verhältnis. Auch die Ausbildung der katalytisch wirkenden Beschichtung als eine Schicht aus Nano-Partikeln kann vorgesehen sein. Die katalytisch wirkende Beschichtung der eingesetzten Elemente kann insbesondere derart gewählt sein, dass Kohlenwasserstoffe katalytisch umgesetzt werden zu unschädlichen Gasbestandteilen. Insbesondere kann das Katalysatorelement dazu ausgebildet sein, Kohlenwasserstoffe (HC) zu Kohlendioxid (CO2) und Wasserdampf (H2O), Kohlenmonoxid (CO) in Kohlendioxid (CO2) und Stickoxide (NO, NO2) in Stickstoff (N2) und Sauerstoff (O2) umzuwandeln.

Die Brenngasreinigungsvorrichtung bildet so vorzugsweise eine Einheit und/oder kann mit geringen Abständen zwischen dem ersten Filterabschnitt, dem zweiten Filterabschnitt und dem Katalysatorelement im Bereich des Brennraums angeordnet werden, wo die Abgastemperaturen ausreichend hoch sind, um eine optimale Funktion aller Komponenten, insbesondere des Katalysatorelements, zu gewährleisten.

Insbesondere kann durch vorlagern der Filterabschnitte eine Verschmutzung des Katalysatorelements vermindert werden. Die dem Katalysator optional vorgelagerten Keramikbauteile oder das das Katalysatorelement ausbildende oder umfassende Bauteil können als Wärmespeicher fungieren, um die notwendige Temperaturkonstanz für die effektive Wirkungsweise des Katalysatorelements bereitzustellen. Damit ist der Katalysator sowohl vor Verunreinigungen als auch Temperaturschwankungen geschützt. Es ist vorteilhaft, das Katalysatorelement vor Verunreinigungen durch Feinstaub und größere Partikel zu schützen, da die für eine Selbstreinigung durch Nachverbrennen der Partikel bzw. Feinstaub zu erzielenden Temperaturen im Bereich größer als 800 °C liegen. Derart große Temperaturen können das Katalysatorelement degenerieren, d. h. die Funktion des Katalysatorelements einschränken, und auf Dauer die Effizienz des Katalysatorelements mindern bzw. das Katalysatorelement zerstören.

In anderen Worten findet die Filtrierung vorzugsweise kaskadiert oder gradiert in der Brenngasreinigungsvorrichtung statt, insbesondere in einem Partikelfilter des ersten Filterabschnitts. Die Filterung im ersten Filterabschnitt erfolgt insbesondere auf mechanischem Wege. Dazu weist der erste Filterabschnitt einen Partikelfilter mit großer aktiver Fläche auf, dessen Eigenschaften auf die Aufnahme und Rückhaltung von Partikeln, insbesondere der großen bis mittleren Partikel, welche eine Hauptabmessung von 2,5 bis 10 µm aufweisen können, hin optimiert sind.

Die Funktionseinheit des elektrostatischen Abscheiders im zweiten Filterabschnitt ist von einer Benetzung mit Partikeln, beispielsweise Ruß, im Wesentlichen unabhängig, so dass zu jedem Zeitpunkt oder zumindest annähernd zu jedem Zeitpunkt dessen Funktion gewährleistet ist. In anderen Worten werden Partikel als Teil des Brenngases bzw. Rauchgases gefiltert, indem sie den ersten Filterabschnitt und den zweiten Filterabschnitt durchlaufen, wobei Partikel mit größerer Größe zuerst innerhalb der (porösen) Struktur, insbesondere Filterstruktur, des ersten Filterabschnitts aufgefangen werden, und Partikel mit kleinerer Größe, die den ersten Filterabschnitt passieren, werden durch den elektrostatischen Abscheider aufgefangen, festgehalten bzw. aus dem Brenngas gefiltert und/oder einfach ionisiert und entlang der Abscheidestrecke (z.B. Ofenrohr) angelagert. Genauer gesagt, werden die kleinsten verbleibenden Teile der Partikel, die als Feinstaub bezeichnet werden können, beim Passieren des elektrostatischen Abscheiders des zweiten Filterabschnitts durch die elektrische Kraft des elektrostatischen Feldes aufgefangen und entweder zur Anoden- oder zur Kathodenseite getrieben bzw. von diesen angezogen.

Vorteilhafterweise ist der erste Filterabschnitt mit einem Brennraumanschluss der Brenngasreinigungsvorrichtung, insbesondere unmittelbar bzw. direkt, verbunden. Unter den Begriffen unmittelbar bzw. direkt ist zu verstehen, dass kein weiteres Element bzw. Bauteil zwischen dem ersten Filterabschnitt und dem Brennraumanschluss angeordnet ist. In anderen Worten können Verbrennungsgase über den Brennraumanschluss, der wieder mit einem Brennraum, insbesondere eines Kaminofens, verbunden sein kann, in die Brenngasreinigungsvorrichtung gelangen. Von dem Brennraumanschluss können die Verbrennungsgase direkt in den ersten Filterabschnitt geleitet werden. In anderen Worten ist der erste Filterabschnitt der primäre Abgasbehandlungsbereich der Brenngasreinigungsvorrichtung. Der zweite Filterabschnitt liegt strömungstechnisch, insbesondere in Strömungsrichtung, hinter dem ersten Filterabschnitt und bildet daher einen sekundären Abgasbehandlungsbereich aus. Der zweite Filterabschnitt und/oder das Katalysatorelement sind mit einem Abgasrohr- und/oder einem Kaminrohranschlussstutzen verbunden. Durch diesen Abgasrohr- und/oder einem Kaminrohranschlussstutzen kann die Brenngasreinigungsvorrichtung mit einem Abgasrohr bzw. einem Kaminrohr verbunden sein oder werden, um so die gereinigten Abgase in die Umgebung bzw. Umwelt abführen zu können.

Die Brenngasreinigungsvorrichtung ist dazu konfiguriert, vorzugsweise in einem Brennraum oder in der Nähe eines Brennraums angeordnet zu werden und vorzugsweise eine Abgasreinigung, insbesondere im Durchschnitt während eines Betriebes, von Kohlenmonooxid (CO) im Bereich von 500 mg/m³, für Stickoxide (NOₓ) <160 mg/m³, für Kohlenwasserstoffe (HC) <70 mg/m³ und Feinstaub PM <40 mg/m³ (jeweils m³Brennholz) während eines gesamten Zyklus vom Kaltstart hin über das Brennstoffnachlegen bis zum Ende des Abbrandes einer Holzfeuerbetriebstätte, insbesondere eines Kaminofens, zu gewährleisten.

Unter einem "in der Nähe des Brennraums angeordnet sein" ist insbesondere eine maximale Distanz von 1 m, bevorzugt von maximal 0,5 m und besonders bevorzugt von maximal 0,3 m zwischen Brennraum und der Brenngasreinigungsvorrichtung, insbesondere des Katalysatorelements und/oder des zweiten Filterabschnitts, zu verstehen.

In einer Ausführungsform ist der zweite Filterabschnitt vorzugsweise in Strömungsrichtung nach dem ersten Filterabschnitt angeordnet. Insbesondere kann der zweite Filterabschnitt in Strömungsrichtung eines Brenngases unmittelbar bzw. direkt nach dem ersten Filterabschnitt angeordnet sein. Das bedeutet, dass vorzugsweise kein weiteres Element bzw. Bauteil zwischen dem ersten Filterabschnitt und dem zweiten Filterabschnitt angeordnet ist. Beispielsweise können der erste Filterabschnitt und der zweite Filterabschnitt direkt miteinander verbunden sein, beispielsweise durch Stecken, Schweißen und/oder Verschrauben. Insbesondere können der erste Filterabschnitt und der zweite Filterabschnitt formschlüssig, kraftschlüssig und/oder formschlüssig miteinander verbunden sein. Diese Anordnung hat den Vorteil, dass größere Partikel aus einem Brenngas gefiltert werden können, bevor das Brenngas den elektrostatischen Abscheider durchströmt. Im elektrostatischen Abscheider befinden sich in einem Brenngas im Wesentlichen nur noch Partikel, die dem Feinstaub zuzuordnen sind und die zu klein sind, um vom ersten Filterabschnitt erfasst zu werden. Daher stören die im ersten Filterabschnitt dem Brenngas entzogenen Partikel die Funktionsweise des zweiten Filterabschnitts nicht.

Unter der Strömungsrichtung ist die Bewegungsrichtung eines Brenngases zu verstehen, dass insbesondere durch die Brenngasreinigungsvorrichtung gereinigt wird und/oder werden soll. Beispielsweise ist darunter die Richtung eines Brenngases zu verstehen, dass sich von einer Brennkammer zu einem Kaminrohr bewegt. Mit anderen Worten ist der zweite Filterabschnitt stromabwärts des ersten Filterabschnitts angeordnet. Folglich durchströmt ein Brenngas zuerst den ersten Filterabschnitt und anschließend den zweiten Filterabschnitt.

In einer Ausführungsform sind der erste Filterabschnitt und der zweite Filterabschnitt vorzugsweise unmittelbar aufeinanderfolgend angeordnet. Unter unmittelbar ist zu verstehen, dass der erste Filterabschnitt und der zweite Filterabschnitt direkt aneinander angrenzend angeordnet sind. Mit anderen Worten oder alternativ ist vorzugsweise keine weitere Komponente und/oder ein Zwischenraum zwischen dem ersten Filterabschnitt und dem zweiten Filterabschnitt angeordnet.

Es ist vorteilhaft, wenn der erste Filterabschnitt und/oder der zweite Filterabschnitt eine Sandwichstruktur bilden. Unter einer Sandwichstruktur ist eine Anordnung mit verschiedenen Schichten zu verstehen, die insbesondere direkt angrenzend zueinander angeordnet sind. Beispielsweise kann der erste Filterabschnitt zumindest eine erste Filterschicht und der zweite Filterabschnitt zumindest eine zweite Filterschicht umfassen. Dadurch ist eine kompakte Bauweise der Brenngasreinigungsvorrichtung möglich. Durch eine kompakte und insbesondere modulare Keramikstruktur ist die Sandwichstruktur in der Lage, Wärmeenergie so zu speichern, dass sich ein Temperaturgradient in Strömungsrichtung vom stromaufwärts angeordneten Ende des ersten Filterabschnitts, vorzugsweise von 400 bis1.300°C, bis zum in Strömungsrichtung stromabwärts angeordneten Ende des zweiten Filterabschnitts, vorzugsweise 250-800°C, aufbaut. Anders gesagt, die Emissionen folgen während des Verbrennungsprozesses Wellen mit Spitzen bei Temperaturabfall bzw. Temperaturabsenkung oder in der Kaltstartphase des Ofens. Dank der gespeicherten Wärmeenergie in der Sandwichstruktur kann der katalytische Prozess stabilisiert werden. Ferner kann die Geometrie der Sandwichstruktur Platten, einen Würfel/Quader, einen Zylinder oder eine andere funktionale Form umfassen. Zur Funktionsoptimierung kann der Querschnitt/Durchmesser des Sandwiches verändert werden, um die Strömungsgeschwindigkeit und damit die Verweilzeit der Partikel zur Optimierung des Filtrationsprozesses zu beeinflussen. Der Abscheidegrad der Sandwichstruktur kann mehr als 85% nach Masse und mehr als 90% nach Anzahl der Partikel für Öfen, insbesondere Kaminöfen, bis 6 kW Nennleistung betragen.

Für den Kaltstart ist es optional möglich, das Katalysatorelement durch ein integriertes Heizelement, insbesondere ein metallisches oder elektrisch leitendes Heizelement, zu erwärmen.

In einer Ausführungsform sind der erste Filterabschnitt und der zweite Filterabschnitt und das Katalysatorelement vorzugsweise gemeinsam in einem Gehäuse angeordnet. Das ist vorteilhaft, um die Brenngasreinigungsvorrichtung als eine einzelne handhabbar bzw. montierbar Einheit auszubilden. Das Gehäuse kann beispielsweise aus einem Metall oder einer Keramik hergestellt sein.

In einer Ausführungsform weist der erste Filterabschnitt vorzugsweise, insbesondere in Strömungsrichtung, eine sich, insbesondere stetig, verändernde, insbesondere abnehmende, Porosität auf. Unter der Porosität ist eine dimensionslose Messgröße zu verstehen, die das Verhältnis von Hohlraumvolumen zu Gesamtvolumen darstellt. Vorteilhafter weise ist die poröse Struktur eine offenporige Struktur. Unter dem Begriff abnehmende Porosität ist eine Veränderung der Porosität von einer großen Porosität mit großen (hohl) Strukturen zu einer kleinen Porosität mit kleineren Strukturen zu verstehen. Unter einer sich verändernden Porosität kann eine sich kontinuierlich verändernde Porosität, eine sich in Stufen verändernde Porosität und/oder eine absteigende oder ansteigende Porosität verstanden werden. Beispielsweise kann der erste Filterabschnitt einteilig, insbesondere monolithisch, ausgebildet sein, wobei die Porosität des ersten Filterabschnitt kontinuierlich abnimmt. Alternativ ist es möglich, dass der erste Filterabschnitt mehrere Platten oder Schichten umfasst, die jeweils eine unterschiedliche Porosität aufweisen, wobei die Porosität der Platten oder Schichten vorzugsweise in Strömungsrichtung absteigen ist. Die Platten sind vorzugsweise unmittelbar aufeinanderfolgend bzw. angrenzend angeordnet. Eine abnehmende Porosität ist vorteilhaft, da dadurch zunächst größere Partikel und anschließend kleinere Partikel abgeschieden werden können.

In einer Ausführungsform sind/ist der erste Filterabschnitt und/oder der zweite Filterabschnitt vorzugsweise porös, perforiert, wabenförmig, faserstrukturiert und/oder matrixstrukturiert. Unter einer porösen Struktur ist vorzugsweise eine offenporige Struktur zu verstehen, beispielsweise in der Form eines offenporigen Keramikschaums. Bei einer porösen Struktur ist eine sehr große Filteroberfläche realisierbar. Eine wabenförmige Struktur ist einfach in der Herstellung und erlaubt eine möglichst große Oberfläche und eine effiziente Ausnutzung des zur Verfügung stehenden Raums. Eine Faserstruktur kann beispielsweise durch ein feines Gewebe bereitgestellt werden. Eine Faserstruktur ist kosteneffizient herstellbar, sodass es beispielsweise als Auswechselteil bereitgestellt werden kann. Eine Matrixstruktur bildet eine weitere Möglichkeit, eine durchdringbare offenporige Struktur bereitzustellen. Beispielsweise kann eine Matrixstruktur durch Tränken eines offenporigen gesinterten Werkstoffs, beispielsweise einer Schaumkeramik, mit einem geschmolzenen zweiten Stoff hergestellt werden.

In einer Ausführungsform umfasst der zweite Filterabschnitt vorzugsweise eine leitfähige Keramik oder eine leitfähige Beschichtung. Die leitfähige Keramik kann beispielsweise als ein offenporiger Keramikschaum ausgebildet sein. Alternativ sind weitere leitfähige Materialen, insbesondere Metalle, denkbar. Die leitfähige Keramik oder die leitfähige Beschichtung ist vorzugsweise Teil des elektrostatischen Abscheiders.

In einer Ausführungsform erzeugt der elektrostatische Abscheider ein elektrisches Feld, wobei sich das elektrische Feld vorzugsweise in eine Richtung orthogonal zur Strömungsrichtung oder parallel zur Strömungsrichtung erstreckt. Die Ausrichtung des elektrostatischen Feldes ist abhängig von der Geometrie und Anordnung der mit einer elektrischen Spannung beaufschlagten Elemente des elektrostatischen Abscheiders. Dadurch ist es möglich, die Ausrichtung des elektrostatischen Abscheiders und somit des Felds an eine vorgesehene Einbaulage der Brenngasreinigungsvorrichtung, beispielsweise für einen bestimmten Typ eines Kaminofen, anzupassen. Eine parallele Ausrichtung hat dabei den Vorteil, dass dies konstruktiv einfach und somit kostengünstig erreicht werden kann. Eine senkrecht zur Strömungsrichtung orientierte Feldausrichtung erreicht hingegen eine Kompakte und weitestgehend strömungsgeschwindigkeitsunabhängige Abscheidewirkung.

In einer Ausführungsform weist der zweite Filterabschnitt vorzugsweise zumindest ein erstes Elektrodenelement und zumindest ein zweites Elektrodenelement auf, die jeweils ein leitfähiges Material umfassen, wobei zwischen dem ersten Elektrodenelement und dem zweiten Elektrodenelement ein Isolatorelement angeordnet sein kann. Das Isolatorelement kann auch als Dielektrikum bezeichnet werden. Mit anderen Worten sind das erste Elektrodenelement und das zweite Elektrodenelement dazu ausgebildet, jeweils mit einer Polarität einer Spannungsquelle, insbesondere eine Gleichstromspannungsquelle, verbunden zu sein. Das erste Elektrodenelement und das zweite Elektrodenelement können je nach Polarität als Anode oder Kathode bezeichnet werden. Das erste Elektrodenelement und das zweite Elektrodenelement können eine plattenförmige, zylindrische, kugelförmige, kreisförmige, ringförmige, spiralförmige und/oder polygonale Geometrie aufweisen. Ferner ist es denkbar, dass das erste und/oder das zweite Elektrodenelement, eine Dornelektrode, einen Sägezahnionisator und/oder einen Wellenionisator umfassen.

Das erste Elektrodenelement, das zweite Elektrodenelement und das Isolatorelement sind beispielsweise jeweils aus einer plattenförmigen Schaumkeramik hergestellt. Wobei das erste Elektrodenelement und das zweite Elektrodenelement aus einer leitfähigen Keramik hergestellt sind oder eine leitfähige Beschichtung umfassen. Das Isolatorelement ist beispielsweise aus einer nicht leitenden Keramik hergestellt. Das erste Elektrodenelement und das zweite Elektrodenelement und das Isolatorelement bilden jeweils Schichten, wobei die Schicht des Isolatorelement zwischen der Schicht des ersten Elektrodenelements und der Schicht des zweiten Elektrodenelements angeordnet ist.

In einer Ausführungsform umfasst der zweite Filterabschnitt vorzugsweise mehrere erste Elektrodenelemente, mehrere zweite Elektrodenelemente und mehrere Isolatorelemente, wobei die mehreren ersten Elektrodenelemente, mehreren zweiten Elektrodenelemente und mehreren Isolatorelemente eine sich wiederholende Struktur bilden können. Beispielsweise sind jeweils die ersten Elektrodenelemente und die zweiten Elektrodenelemente abwechselnd aufeinanderfolgend angeordnet, wobei die ersten und zweiten Elektrodenelemente jeweils durch ein Isolatorelement, beispielsweise einem keramischen Dielektrikum, zueinander beabstandet sind. Anders gesagt, sind die ersten Elektrodenelemente und die zweiten Elektrodenelemente und Isolatorelemente schichtweise angeordnet. Das Isolatorelement kann beispielsweise eine Schaumkeramikfolie umfassen oder sein.

Aus Sicherheitsgründen ist der elektrostatische Abscheider vorteilhafterweise, insbesondere ein Kondensator, mit einem nichtleitenden Material, beispielsweise aus Keramik, umhüllt, um elektrische Kurzschlüsse mit der Umgebung oder die Möglichkeit eines direkten Kontakts zu verhindern.

Der Kondensator des elektrostatischen Abscheiders funktioniert beispielsweise wie folgt. Durch das Anlegen einer hohen Gleichspannung wird beispielsweise das erste Elektrodenelement zur negativen Elektrodenseite (Kathode) und das zweite Elektrodenelement zur positiven Elektrode (Anode) oder umgekehrt. Alternativ kann, bevorzugt bei einer orthogonalen Ausrichtung des E-Feldes, eine Hochvolt-Wechselspannung verwendet werden. Dadurch baut sich ein elektrostatisches Feld zwischen den beiden Methodenelementen auf. Das elektrostatische Feld wird durch die Ionenwanderung zwischen Kathode und Anode definiert (Gleichstromfluss über die isolierende Mittelschicht oder durch die Luft im Inneren der porösen Struktur in beide Richtungen: Kationen und Anionen). Die Eigenschaften des elektrischen Feldes und der Ionenwanderung werden durch die Art der verwendeten leitfähigen Materialien bestimmt, beispielsweise durch verschiedene Metalle, Graphit, Schwermetalle usw., die innerhalb oder auf der Oberfläche eines Keramiksubstrats angeordnet sind.

Der Kondensator ist an dem ersten Elektrodenelement und dem zweiten Elektrodenelement vorzugsweise mit einer elektrischen Gleichspannungs-Hochspannungsquelle kontaktiert bzw. verbunden, insbesondere bis zu unterschiedlichen maximalen Hochspannungen in Kombination mit der Schichtdicke des ersten Elektrodenelements, des zweiten Elektrodenelements und des Isolatorelements, um die Sicherheit des Systems vor elektrischen Kurzschlüssen zu gewährleisten. Unter einer Hochspannung oder hohen Spannung im Sinne der Erfindung ist eine Spannung von mindestens 20000 Volt, bevorzugt von mindestens 10000 Volt und besonders bevorzugt von mindestens 5000 Volt zu verstehen.

Entsprechend den elektrischen Kräften zwischen den Elektrodenelementen werden positiv geladene Teilchen im Brenngas bzw. Rauchgas von der Anodenseite und negative Teilchen von der Kathodenseite angezogen.

In einer Ausführungsform ist der zweite Filterabschnitt vorzugsweise zumindest teilweise mit einem isolierenden Material umschlossen. Dadurch können die unter Spannung stehenden Elemente des elektrostatischen Abscheiders von der Umgebung, beispielsweise von dem Gehäuse eines Kaminofens oder eines Abgasrohrs isoliert werden. Dadurch können mögliche Kurzschlüsse vermieden werden.

In einer Ausführungsform umfasst das Katalysatorelement und/oder der zweite Filterabschnitt vorzugsweise zumindest eine Prallplatte und/oder wobei in Strömungsrichtung vor dem Katalysatorelement und/oder dem zweite Filterabschnitt zumindest eine Prallplatte vorgesehen ist. Die Prallplatte bildet vorzugsweise ein erstes oder zweites Elektrodenelement des elektrostatischen Abscheiders aus. Die Prallplatte kann unterschiedliche Geometrie umfassen. Beispielsweise kann die Prallplatte eine kugelförmige, eine kreisförmige und/oder eine polygonale Geometrie umfassen. Eine kugelförmige Prallplatte hat den Vorteil eines niedrigen Strömungswiderstands. Eine kreisförmige oder auch eine polygonale Geometrie kann hingegen besonders gewichtssparend oder einfach zu fertigen sein. Die Geometrie der Prallplatte kann so gewählt werden, dass die Strömungsrichtung geleitet bzw. beeinflusst wird.

In einer Ausführungsform ist vorzugsweise ein Heizelement in einem Bereich des Katalysatorelements angeordnet. Das Heizelement kann beispielsweise eine Heizspirale umfassen, die über eine Spannungsquelle aufgeheizt wird. Das Heizelement dient dazu, bei einem Kaltstart des Kaminofens das Katalysatorelement auf eine Betriebstemperatur vorzuheizen. Dadurch können Emissionen, insbesondere gesundheitsschädliche Abgase, bereits beim Beginn einer Verbrennung vermindert werden.

In einer Ausführungsform ist das Katalysatorelement vorzugsweise zumindest teilweise in dem zweiten Filterabschnitt angeordnet und/oder wobei das Katalysatorelement zumindest teilweise den zweiten Filterabschnitt ausbildet. Es ist denkbar, dass das Katalysatorelement einen von dem zweiten Filterabschnitt getrennten Abschnitt bildet. Beispielsweise ist das Katalysatorelement als eine Prallplatte mit einer definierten Geometrie ausgebildet. Das Katalysatorelement kann alternativ eine offenporige Geometrie umfassen, beispielsweise ein Keramikschaum oder eine wabenförmige Struktur. Das Katalysatorelement ist dabei vorzugsweise in einem in Strömungsrichtung des Brenngases stromabwärts angeordneten Bereich im zweiten Filterelement angeordnet. Sollte das Katalysatorelement zumindest teilweise durch einen Bestandteil ausgebildet oder gehalten sein, der dem zweiten Filterabschnitt zuzuordnen ist, so kann eine kompakte Anordnung erreicht werden. Zusätzlich kann hierbei auch die Wärmespeicherfähigkeit des zweiten Filterabschnitts dazu genutzt werden, Temperaturschwankungen beim Katalysatorelement zu reduzieren. Hierdurch kann daher die Funktion der Brenngasreinigungsvorrichtung weiter unterstütz werden.

In einer Ausführungsform umfasst das Katalysatorelement vorzugsweise Palladium, Platin, Nickel, Chrom und/oder Rhodium. Andere Edelmetalle oder Elemente, die katalytische Eigenschaften aufweisen sind alternativ oder zusätzlich möglich.

In einer Ausführungsform ist das Katalysatorelement vorzugsweise als eine Beschichtung mit katalytischen Eigenschaften ausgebildet. Beispielsweise umfasst das Katalysatorelement eine katalytisch wirkende Beschichtung aus einer Schicht aus Nano-Partikeln. Vorzugsweise umfasst ein Elemente des zweiten Filterabschnitts, welches insbesondere ein Elektrodenelement sein kann, das stromabwärts angeordnet ist, eine integrierte Beschichtung mit katalytischer Funktion für Oxidation und/oder Reduktion von Abgasen. Diese Funktionen können auch durch einzelne Schichten und/oder Elemente getrennt werden.

In einer Ausführungsform umfasst die Brenngasreinigungsvorrichtung vorzugsweise zumindest einen Bypasskanal. Der Bypasskanal ist vorteilhaft, um eine Strömung des Brenngases auch dann zu ermöglichen, wenn der erste Filterabschnitt, der zweite Filterabschnitt und/oder das Katalysatorelement durch Verunreinigungen, insbesondere Partikel und/oder Feinstaub, verstopft ist. Der Bypasskanal kann je nach Ausgestaltung der Filterabschnitte und des Katalysatorelements verschiedene Geometrien und/oder Positionen aufweisen. Beispielsweise ist der Bypasskanal zylindrisch oder in einem Querschnitt ringförmig. In einer Ausführungsform ist es möglich, dass stromaufwärts des Bypasskanals ein Prallelement angeordnet ist. Der Bypasskanal kann jeweils nur den ersten Filterabschnitt und/oder den zweiten Filterabschnitt und/oder das Katalysatorelement durchdringen. Insbesondere kann der Bypasskanal alle diese Abschnitte durchdringen bzw. strömungsmechanisch umgehen. Durch einen Bypasskanal kann die Betriebssicherheit der Brenngasreinigungsvorrichtung verbessert werden.

In einer Ausführungsform ist die Brenngasreinigungsvorrichtung vorzugsweise zumindest teilweise selbstreinigend. Beispielsweise können im ersten Filterabschnitt und im zweiten Filterabschnitt ausgefilterte bzw. abgeschiedene Partikel durch Nachverbrennen entfernt bzw. aufgelöst werden. Dadurch ist es möglich, die Wartungsintensität der Brenngasreinigungsvorrichtung zu verringern.

In einer Ausführungsform ist ein Strömungsweg eines Brenngases im ersten Filterabschnitt vorzugsweise zwischen 0,5 und 10 cm lang und/oder ein Strömungsweg eines Brenngases im zweiten Filterabschnitt zwischen 0,5 und 10 cm lang.

In einer Ausführungsform ist die Brenngasreinigungsvorrichtung vorzugsweise zumindest unter Verwendung wenigstes eines Verfahrens aus der Gruppe Tauchverfahren, Sprühverfahren, Spritzverfahren, Sintern, Beschichten und 3D-Druck-Verfahren hergestellt.

Gemäß einem weiteren Aspekt der Erfindung kann ein Kaminofen, insbesondere ein Feststoffkaminofen, mit einer Brenngasreinigungsvorrichtung nach einem der vorhergehenden Ausführungsformen bereitgestellt werden. Dabei ist die Brenngasreinigungsvorrichtung vorzugsweise derart im oder am Gehäuse des Kaminofens angeordnet bzw. in den Kaminofen integriert, dass insbesondere eine konstante oder optimale Betriebstemperatur an dem Katalysatorelement gewährleistet ist. Die optimale Betriebstemperatur des Katalysatorelements beträgt zwischen 400 und 800 °C, vorzugsweise zwischen 550 und 600 °C. Die Brenngasreinigungsvorrichtung ist vorzugsweise derart im Kaminofen angeordnet, dass die Funktion des ersten Filterabschnitts und des zweiten Filterabschnitts sowie des Katalysatorelements, die von den im Betrieb vorherrschenden Temperaturen abhängig ist, gewährleistet ist.

In einer Ausführungsform ist die Brenngasreinigungsvorrichtung vorzugsweise in einem Gehäuse des Kaminofens, insbesondere zwischen einer Brennkammer und einem Abgasrohranschluss, angeordnet. Beispielsweise ist die Brenngasreinigungsvorrichtung in der Brennkammer des Kaminofens angeordnet. In einer Ausführungsform ist die die Brenngasreinigungsvorrichtung an einer Außenseite eines Gehäuses des Kaminofens angeordnet. In einer Ausführungsform ist die Brenngasreinigungsvorrichtung, insbesondere das Katalysatorelement, stromaufwärts eines Abgasrohrs oder eines Anschlussstutzens des Kaminofens für ein Abgasrohr angeordnet. Der Begriff Abgasrohr bezieht sich auf ein Rohr, das den Kaminofen mit einem Kaminrohr verbindet. Alternativ ist es möglich, dass die Brenngasreinigungsvorrichtung stromaufwärts eines Kamins bzw. eines Kaminrohrs angeordnet ist.

Vorzugsweise ist die Brenngasreinigungsvorrichtung im Bereich der Brennkammer des Kaminofens angeordnet, da die Temperaturen des Brenngases bzw. Rauchgases in diesem Bereich ausreichend hoch sind um eine optimale Funktion aller Komponenten zu gewährleisten.

Einzelne Merkmale und Ausführungsformen der vorliegenden Erfindung können mit anderen Merkmalen in anderen Ausführungsform kombiniert werden und so neue Ausführungsformen bilden. Vorteile und Weiterbildungen, die für die Merkmale oder Ausführungsformen genannt sind, gelten analog auch für die neuen Ausführungsformen. Weiterbildungen und Vorteile, die in Zusammenhang mit der Vorrichtung genannt sind, gelten analog auch für das Verfahren und andersherum.

Im Folgenden wird die Offenbarung beispielhaft unter Bezugnahme auf die beigefügten Figuren beschrieben, in denen zeigen
- **Figur 1**:: eine schematische Ansicht einer erfindungsgemäßen Ausführungsform einer Brenngasreinigungsvorrichtung;
- **Figur 2:**: eine perspektivische Ansicht einer Keramikplatte;
- **Figur 3:**: eine perspektivische Ansicht einer Keramikplatte; und
- **Figur 4:**: eine schematische Ansicht eines elektrostatischen Abscheiders.

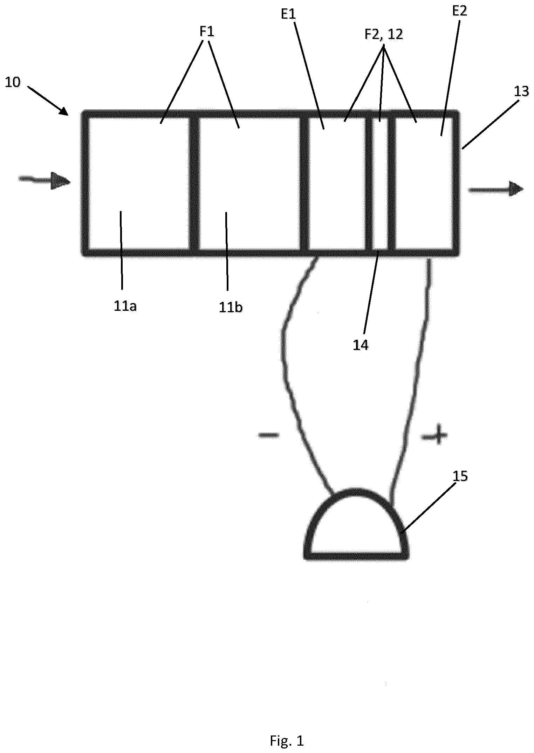

**Figur 1** zeigt eine schematische Ansicht einer Brenngasreinigungsvorrichtung 10. Die Brenngasreinigungsvorrichtung 10 umfasst einen ersten Filterabschnitt F1 und einen zweiten Filterabschnitt F2. Der erste Filterabschnitt F1 ist in Strömungsrichtung eines Brenngases bzw. eines Rauchgases vor dem zweiten Filterabschnitt angeordnet. Die Strömungsrichtung ist in Figur 1 durch Pfeile angegeben.

Der erste Filterabschnitt F1 weist eine Filterstruktur 11 auf. Die Filterstruktur 11 umfasst ein erstes Filterelement 11a und ein zweites Filterelement 11b. Das erste Filterelement 11a ist im Strömungsrichtung unmittelbar vor dem zweiten Filterelement 11b angeordnet. Das erste Filterelement 11a und das zweite Filterelement 11b weisen voneinander verschiedene Porositäten auf. Das erste Filterelement 11a weist eine größere Porosität als das zweite Filterelement 11b auf. Mit anderen Worten umfasst der erste Filterabschnitt F1 zwei Filterstufen. Eine Filterstufe für große Partikel und eine Filterstufe für kleine Partikel. Das erste Filterelement 11a stellt eine Filterstufe für große Partikel und das zweite Filterelement 11b stellt eine Filterstufe für kleinere Partikel bereit. Das erste Filterelement 11a und das zweite Filterelement 11b sind als Filterplatten aus einer Schaumkeramik bereitgestellt. Eine abnehmende Porosität der Filterelemente 11a, 11b ist vorteilhaft, da dadurch zunächst größere Partikel und anschließend kleinere Partikel abgeschieden werden können. Dadurch kann ein Verstopfen der Filterelemente vermieden werden. Alternativ ist denkbar, dass der erste Filterabschnitt F1 einteilig ausgebildet ist und nur eine Filterelement aufweist, wobei hier das Filterelement eine sich kontinuierlich verändernde, insbesondere absteigende, Porosität aufweist. Ferner ist es denkbar, dass der erste Filterabschnitt F1 mehr als zwei Filterelemente mit unterschiedlichen Porositäten oder anderen Eigenschaften umfasst.

Der zweite Filterabschnitt F2 ist unmittelbar nach dem ersten Filterabschnitt F1 angeordnet. Der zweite Filterabschnitt F2 umfasst einen elektrostatischen Abscheider 12. Der elektrostatische Abscheider 12 umfasst einen Kondensator. Der Kondensator ist mit einer Gleichstrom-Hochspannungsquelle 15 verbunden.

Der elektrostatische Abscheider 12 umfasst ein erstes Elektrodenelement E1 und ein zweites Elektrodenelement E2. Zwischen dem ersten Elektrodenelement E1 und dem zweiten Elektrodenelement E2 ist ein Isolatorelement 14 angeordnet.

Das erste Elektrodenelement E1, das zweite Elektrodenelement E2 und das Isolatorelement 14 bilden den Kondensator des elektrostatischen Abscheiders 12.

Das erste Elektrodenelement E1 ist in Strömungsrichtung vor dem Isolatorelement 14 angeordnet. Das zweite Elektrodenelement E2 ist im Strömungsrichtung nach dem Isolatorelement 14 angeordnet. Das erste Elektrodenelement E1, das zweite Elektrodenelement E2 und das Isolatorelement 14 sind jeweils direkt aneinander angrenzend angeordnet. Alternativ ist ein Luftspalt zwischen dem erste Elektrodenelement E1, den zweiten Elektrodenelement E2 und/oder dem Isolatorelement 14 möglich.

Das 1. Elektrodenelement E1 und das 2. Elektrodenelement E2 sind aus einer leitfähigen Keramik hergestellt. Das Isolatorelement 14 ist aus einer nicht leitenden Keramik bzw. einem anderen nichtleitenden Material, insbesondere einem Dielektrikum, hergestellt.

An einem in Strömungsrichtung von dem Isolatorelement 14 abgewandten Ende des zweiten Elektrodenelements E2 ist ein Katalysatorelement 13 angeordnet. Das Katalysatorelement 13 ist Teil des zweiten Elektrodenelements E2. Das Katalysatorelement 13 umfasst ein keramisches Material mit einer Beschichtung mit katalytischen Eigenschaften. Alternativ bildet das Katalysatorelement 13 eine eigene konstruktive Komponente. Ferner kann das Katalysatorelement 13 sich in einer möglichen hier nicht gezeigten Ausführungsform zumindest teilweise in den zweiten Filterabschnitt F2 hinein erstrecken.

Im Betrieb durchströmt ein Brenngas bzw. ein Rauchgas zunächst das erste Filterelement 11a des ersten Filterabschnitts F1. Im ersten Filterelement F1 werden zunächst größere Partikel abgeschieden. Anschließend durchströmt das teilweise gereinigte Brenngas das zweite Filterelement 11b des ersten Filterabschnitts F1. Im zweiten Filterelement 11b werden kleinere Partikel abgeschieden, die das erste Filterelement 11a ungehindert passieren konnten. Dazu weist das zweite Filterelement 11b eine kleinere Porosität auf als das erste Filterelement 11a. Als nächstes durchströmt das Brenngas den zweiten Filterabschnitt F2. Im zweiten Filterabschnitt F2 wird mittels des elektrostatischen Abscheiders 12 Feinstaub, der den ersten Filterabschnitt F1 passiert hat, aus dem Brenngas gefiltert.

Anschließend strömt das überwiegend von Partikeln gereinigte Brenngas zu dem Katalysatorelement 13. Dort werden gesundheitsschädliche Gase durch Oxidation und/oder Reduktion zu gesundheitlich unbedenklichen Stoffen umgewandelt.

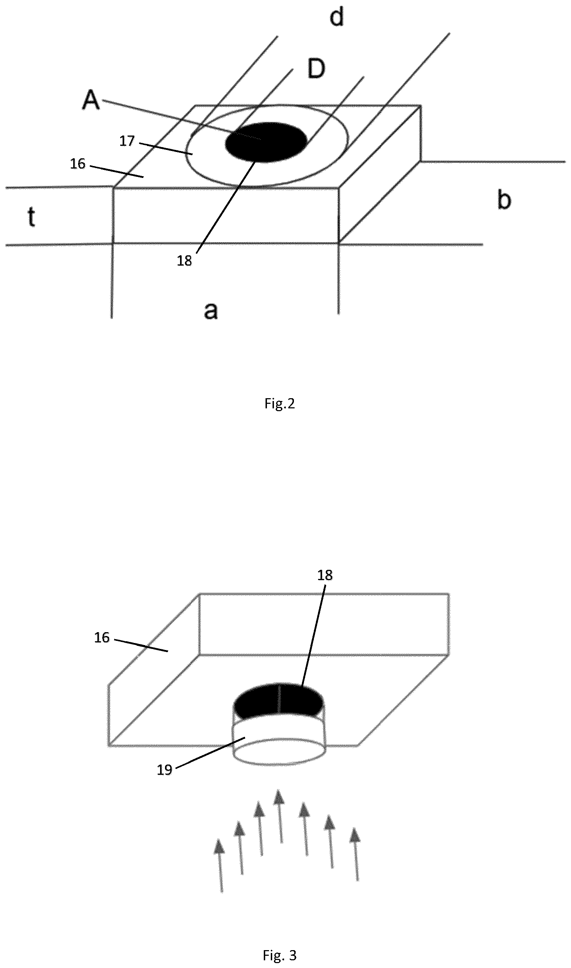

**Figur 2** und **Figur 3** zeigen mögliche Ausführungsformen von Keramikplatten, insbesondere von Schaumkeramikplatten.

Die Keramikplatte 16 in **Figur 2** weist eine rechteckige Geometrie mit den Seitenlängen a und b auf. Der Betrag der Seitenlänge a entspricht dem Betrag der Seitenlänge b. Die Seitenlänge a und die Seitenlänge b betragen zwischen 5 und 30 cm, insbesondere zwischen 10 und 20 cm, vorzugsweise 15 cm. Die Keramikplatte 16 weist eine Höhe t auf. Die Höhe t beträgt zwischen 1 und 6 cm.

Die Keramikplatte 16 weist einen ringförmigen Bereich 17 mit dem Durchmesser d auf. Der Durchmesser d des ringförmigen Bereichs 17 beträgt zwischen 10 und 20 cm, vorzugsweise 15 cm. Der ringförmige Bereich erstreckt sich durch die gesamte Keramikplatte 16 in Richtung der Höhe t. Der ringförmige Bereich 17 umfasst beispielsweise eine leitfähige Keramik. Der ringförmige Bereich 17 kann folglich als erstes Elektrodenelement E1 oder zweites Elektrodenelement E2 verwendet werden. Mit anderen Worten kann die Keramikplatte in **Figur 2** dazu vorgesehen sein, in einem zweiten Filterabschnitt F2 verwendet zu werden.

Die Keramikplatte 16 weist eine Durchgangsöffnung 18 im ringförmigen Bereich 17 auf. Die Durchgangsöffnung 18 umfasst eine zylindrische Geometrie und ist konzentrisch zum ringförmigen Bereich 17 angeordnet. Die Fläche A im Querschnitt der Durchgangsöffnung 18 beträgt zwischen 10 und 20 cm², insbesondere zwischen 15 und 25 cm², vorzugsweise 20 cm². Der Durchmesser der Durchgangsöffnung 18 beträgt vorzugsweise zwischen 2,5 und 7,5 cm, vorzugsweise ca. 5 cm. Die Durchgangsöffnung 18 kann beispielsweise einen Bypass bereitstellen.

**Figur 3** zeigt eine im eingebauten Zustand der Keramikplatte entgegen der Richtung der Strömung ausgerichtete Oberfläche der Keramikplatte. Die Strömungsrichtung eines Abgases ist in **Figur 3** durch Pfeile angegeben. Die Keramikplatte 16 in **Figur 3** weist im Wesentlichen die gleichen Maße wie die Keramikplatte 16 gemäß **Figur 2** auf. Die Keramikplatte 16 in **Figur 3** weist keinen ringförmigen Bereich auf. Vor der Durchgangsöffnung 18 ist in der Keramikplatte 16 gemäß **Figur 3** ein Prallelement 19 angeordnet, welches eine Prallplatte ist. Das Prallelement 19 kann auch als ein Umlenkelement bezeichnet werden. Das Prallelement 19 ist in Strömungsrichtung vor der Durchgangsöffnung 18 bzw. dem Bypass der Keramikplatte 16 angeordnet. Das Prallelement 19 kann ein leitfähiges Material umfassen, insbesondere eine leitfähige Keramik oder eine leitfähige Beschichtung, und ein erstes Elektrodenelement E1 oder ein zweites Elektrodenelement E2 bereitstellen.

Es ist möglich, die in **Figur 2** dargestellte Keramikplatte 16 und die in Figur 3 dargestellte Keramikplatte 16 zu kombinieren. Beispielsweise können die beiden Keramikplatten in der Brenngasreinigungsvorrichtung nacheinander angeordnet werden und die leitfähigen Komponenten jeweils mit einer Hochspannungsquelle verbunden werden. Anders gesagt bilden die beiden Keramikplatten 16 jeweils einen Teil des elektrostatischen Abscheiders 12.

Das Prallelement 19 kann alternativ in Strömungsrichtung nach der Durchgangsöffnung 18 angeordnet sein. Das Prallelement 19 kann eine Beschichtung oder ein Material mit katalytischen Eigenschaften aufweisen. Folglich kann das Prallelement 19 als Katalysatorelement 13 verwendet werden.

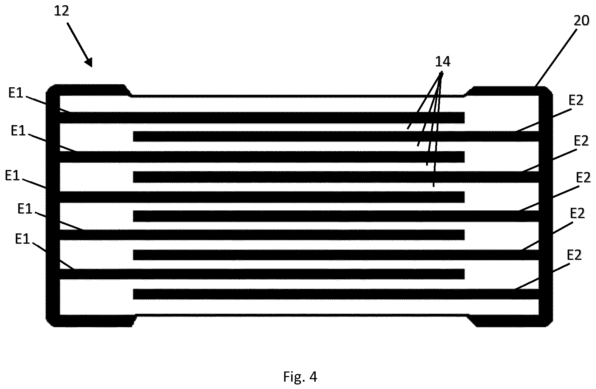

**Figur 4** zeigt eine Ausführungsform eines elektrostatischen Abscheiders 12. Der elektrostatische Abscheider 12 weist mehrere erste Elektrodenelemente E1 und mehrere zweite Elektrodenelemente E2 auf. Die ersten und zweiten Elektrodenelemente E1, E2 sind in einem Gehäuse 20 angeordnet. Die ersten Elektrodenelement E1 und die zweiten Elektrodenelement E2 erstrecken sich jeweils abwechselnd von gegenüberliegenden Gehäuseinnenflächen. Die ersten Elektrodenelemente E1 und die zweiten Elektrodenelemente E2 können auch als Kondensatorplatten bezeichnet werden.

Zwischen dem ersten und zweiten Elektrodenelement E1, E2 ist jeweils ein Isolatorelement 14 angeordnet. Genauer gesagt ist der übrige Freiraum im Gehäuseinneren insbesondere durch das Isolatorelement 14 ausgefüllt. Das Isolatorelement 14 umfasst beispielsweise eine Schaumkeramikfolie. Das bedeutet, dass der elektrostatische Abscheider 12 von einem Brenngas bzw. Rauchgas durchströmbar ist. Beim Durchströmen des elektrostatischen Abscheiders 12 lagert sich durch die Anziehungskraft, die durch das elektrostatische Feld erzeugt wird, Feinstaub an dem ersten Elektrodenelement E1 und/oder dem zweiten Elektrodenelement E2 ab.

Der elektrostatische Abscheider 12 in **Figur 4** weist eine sich wiederholende symmetrische Struktur auf. Durch die Anordnung des ersten und zweiten Elektrodenelements E1, E2 wird ein langer Strömungsweg für ein Brenngas bzw. Rauchgas bereitgestellt. Dadurch ist es möglich, ein Brenngas bzw. ein Rauchgas mehrere elektrostatische Felder durchlaufen zu lassen. Auf diese Art und Weise ist ein hoher Abscheidegrad realisierbar.

Andere Ausführungsformen der vorliegenden Erfindung sind möglich und können von Fachpersonen bei der Anwendung des beanspruchten Gegenstands aus dem Studium der Figuren, der Offenbarung und der beigefügten Ansprüche verstanden und ausgeführt werden. Insbesondere können die jeweiligen Teile/Funktionen des jeweiligen oben beschriebenen Ausführungsform auch miteinander kombiniert werden. Ferner können verschiedene Schritte des Verfahrens in einer anderen Reihenfolge ausgeführt werden, als hier offenbart. In den Ansprüchen schließt das Wort "umfassend" andere Elemente oder Schritte nicht aus und der unbestimmte Artikel "ein" oder "eine" schließt eine Mehrzahl nicht aus. Die bloße Tatsache, dass bestimmte Maßnahmen in voneinander abhängigen Ansprüchen genannt werden, bedeutet nicht, dass eine Kombination dieser Maßnahmen nicht vorteilhaft sein kann. Etwaige Bezugszeichen in den Ansprüchen sollten nicht als Einschränkung des Umfangs der Ansprüche ausgelegt werden.

### Bezugszeichenliste:

- E1: erstes Elektrodenelement
- E2: zweites Elektrodenelement
- F1: erster Filterabschnitt
- F2: zweiter Filterabschnitt
- 10: Brenngasreinigungsvorrichtung
- 11: Filterstruktur
- 12: elektrostatischer Abscheider
- 13: Katalysatorelement
- 14: Isolatorelement
- 15: Spannungsquelle
- 16: Keramikplatte
- 17: ringförmiger Bereich
- 18: Durchgangsöffnung
- 19: Prallelement
- 20: Gehäuse

## Patentansprüche

1. Brenngasreinigungsvorrichtung (10) für einen Kaminofen, umfassend
- einen ersten Filterabschnitt (F1), der zumindest eine Filterstruktur (11), vorzugsweise aus Keramik, umfasst,
- einen zweiten Filterabschnitt (F2), der einen elektrostatischen Abscheider (12) umfasst, und
- zumindest ein Katalysatorelement (13).

2. Brenngasreinigungsvorrichtung (10) nach Anspruch 1, wobei der zweite Filterabschnitt (F2) in Strömungsrichtung nach dem ersten Filterabschnitt (F1) angeordnet ist.

3. Brenngasreinigungsvorrichtung (10) nach Anspruch 1 und/oder 2, wobei der erste Filterabschnitt (F1) und der zweite Filterabschnitt (F2) unmittelbar aufeinanderfolgend angeordnet sind.

4. Brenngasreinigungsvorrichtung (10) nach einem der vorhergehenden Ansprüche, wobei der erste Filterabschnitt (F1), insbesondere in Strömungsrichtung, eine sich, insbesondere stetig, verändernde, insbesondere abnehmende, Porosität aufweist.

5. Brenngasreinigungsvorrichtung (10) nach einem der vorhergehenden Ansprüche, wobei der erste Filterabschnitt (F1) und/oder der zweite Filterabschnitt (F2) zumindest abschnittsweise porös, perforiert, wabenförmig, faserstrukturiert und/oder matrixstrukturiert sind/ist.

6. Brenngasreinigungsvorrichtung (10) nach einem der vorhergehenden Ansprüche, wobei der zweite Filterabschnitt (F2) eine leitfähige Keramik oder eine leitfähige Beschichtung umfasst.

7. Brenngasreinigungsvorrichtung (10) nach einem der vorhergehenden Ansprüche, wobei, der elektrostatische Abscheider (12) ein elektrisches Feld erzeugt, wobei sich das elektrische Feld in eine Richtung orthogonal zur Strömungsrichtung oder parallel zur Strömungsrichtung erstreckt.

8. Brenngasreinigungsvorrichtung (10) nach einem der vorhergehenden Ansprüche, wobei der zweite Filterabschnitt (F2) zumindest ein erstes Elektrodenelement (E1) und zumindest ein zweites Elektrodenelement (E2) aufweist, die jeweils ein leitfähiges Material, umfassen, wobei zwischen dem ersten Elektrodenelement (E1) und dem zweiten Elektrodenelement (E2) insbesondere ein Isolatorelement (14) angeordnet ist.

9. Brenngasreinigungsvorrichtung (10) nach einem der vorhergehenden Ansprüche, wobei der zweite Filterabschnitt (F2) mehrere erste Elektrodenelemente (E1), mehrere zweite Elektrodenelemente (E2) und mehrere Isolatorelemente (14) umfasst, wobei die mehreren erste Elektrodenelemente (E1), mehreren zweite Elektrodenelemente (E2) und mehrere Isolatorelemente (14) eine sich wiederholende Struktur bilden.

10. Brenngasreinigungsvorrichtung (10) nach einem der vorhergehenden Ansprüche, wobei das zumindest eine Katalysatorelement (13) zumindest teilweise in dem zweiten Filterabschnitt (F2) angeordnet ist und/oder wobei das zumindest eine Katalysatorelement (13) zumindest teilweise den zweiten Filterabschnitt (F2) ausbildet.

11. Brenngasreinigungsvorrichtung (10) nach einem der vorhergehenden Ansprüche, wobei der erste Filterabschnitt (F1) mit einem Brennraumanschluss der Brenngasreinigungsvorrichtung (10) verbunden ist.

12. Brenngasreinigungsvorrichtung (10) nach einem der vorhergehenden Ansprüche, wobei der erste Filterabschnitt (F1) und/oder der zweite Filterabschnitt (F2) eine Sandwichstruktur bilden.

13. Brenngasreinigungsvorrichtung (10) nach einem der vorhergehenden Ansprüche, wobei ein Heizelement in einem Bereich des Katalysatorelements (13) angeordnet ist.

14. Brenngasreinigungsvorrichtung (10) nach einem der vorhergehenden Ansprüche, wobei sind der erste Filterabschnitt (F1) und der zweite Filterabschnitt (F2) gemeinsam in einem Gehäuse (20) angeordnet.

15. Kaminofen mit einer Brenngasreinigungsvorrichtung (10) nach einem der vorhergehenden Ansprüche.
